# EUROPEAN PATENT APPLICATION

(11) **EP 1 375 132 A1**
(43) Date of publication of application: **02.01.2004**
(21) Application number: 01273829.0
(22) Date of filing: 14.12.2001
(51) Int. Cl.: B32B 27/32, B65D 65/40, B65D 81/26

(54) **LAMINATE FOR PACKAGING AND PACKAGE**

(30) Priority: 23.02.2001 JP 2001049093
(71) Applicant: IDEMITSU PETROCHEMICAL CO., LTD., Tokyo 130-0015 (JP)
(72) Inventor: KURAHASHI, Akihiko, Kujukuri-machi, Sanbu-gun,Chiba 283-0101 (JP); NAKAGAMI, Hiroyuki, Bunkyo-ku, Tokyo 112-0002 (JP); MITSUZUKA, Hiroyuki, Kujukuri-machi, Sanbu-gun,Chiba 283-0101 (JP)
(74) Representative: Hucker, Charlotte Jane
(86) International application number: PCT/JP2001/010979
(87) International publication number: WO 2002/068193

(57) **Abstract**

A packaging multilayer material 14 is formed by sequentially laying an air permeable heat-resistant fiber material layer 11 having a heat-resistance of not lower than 150°C, a polyethylene type resin spunbonded non-woven fabric layer 12 and a micro-porous film layer 13 in the above listed order by means of thermal bonding. The air permeable heat-resistant fiber material layer 11 is made of resin spunbonded non-woven fabric having a melting point between 150 and 300°C and the polyethylene type resin spunbonded non-woven fabric layer 12 is an ethylene- α -olefin copolymer having a density between 880 and 950 kg/m³, while the micro-porous film layer 13 is made of polyethylene type resin.

## Description

### Technical Field

This invention relates to a packaging multilayer material and also to a package formed by using such a multilayer material. More particularly, the present invention relates to a packaging multilayer material for packaging a functional article such as a deoxidizing agent, a drying agent or a desiccating agent and also to a package formed by using such a multilayer material.

### Background Art

Many deoxidizing agents and drying agents have been used in recent years in order to prevent decay, degeneration and degradation of processed foods. Deoxidizing agents (oxygen absorbing agents) are used in a powdery or granular state and contained in air permeable small bags. Biscuits including rice crackers and dried laver that can lose their tastes and commercial values by absorbing moisture are also packaged with silica gel or some other drying agent contained in a bag.

Thus, such packages of functional agents are normally packaged by means of an air permeable packaging material in order to absorb air, moisture, oxygen and so on in the packages (bags) containing such articles. Air permeable packaging materials are also used for deodorants and insecticides so that effective ingredients may come out from packaged agents as they permeate through the packaging material. In recent years, odor adsorbents including powdery active carbon and charcoal are packaged in the form of sheets having a large surface area and often used on beds in hospitals. Additionally, as a result of expanded trades of electro/electric devices, medical devices, precision machines and so on, large packages of drying agents and moisture absorbing agents are being widely used to protect them against moisture and prevent oxidization.

Air permeable packaging materials are required to prevent the packaged powdery agents from leaking and show a sufficient heat-sealing strength when forming packages. In other words, they are required to have a good bulking/packaging property and show a high and stable sealing strength so as to be adapt themselves to continuous high speed packaging operations. Additionally, if a deliquescent desiccating agent is contained, the packaging material is also required to be waterproof Particularly, there is a strong demand for packaging materials that can be applied equally to small packages of deoxidizing agents and desiccating agents and to large packages of active carbon and charcoal and, at the same time, have appropriate waterproof, moisture permeating and air permeating properties.

The following prior art air permeable packaging materials that can be used for packaging any of the above listed agents are known.

### (1) Japanese Patent Publication No. 293667

This published Japanese patent descloses a composite sheet having a paper layer and a non-woven fabric layer that is made of skin-core type bicomonent fibers; of which the non-woven fabric includes a skin component having a melting point not higher than 160°C and a core component having a melting point higher than that of the skin component by 30°C or more. In the composite sheet, the skin component of the non-woven fabric is thermally bonded to the paper to show an interlayer bonding strength of not lower than 400g/15mm width.

However, since the composite sheet is formed by using non-woven fabric made of skin-core type bicomponent fibers, it has a problem that non-woven fabric cannot be manufactured on a stable basis because of the difference of viscosity between and the compatibility of the molten resin of the skin and that of the core. Additionally, the sealing effect is not satisfactory and it can be difficult to raise the packaging rate. Furthermore, the low melting point resin for forming the skin component of the bicomonent fibers dominates the operation of forming the multilayer and the heat-sealing operation. Therefore, the temperature-related conditions face limitations at the time of lamination and the sealing effect also faces limitations at the time of heat-sealing.

### (2) Japanese Patent Application Laid-Open Publication No. 10-235817

This patent document discloses a packaging material to be used for plate-shaped pieces of an oxygen absorbing agent and the packaging material is formed by using warifu (split fiber non-woven fabric) made of polyethylene resin for the inner layer, water absorbing paper for the intermediate layer and a paper board for the outer layer. However, the process of manufacturing the packaging material is complex because, for one reason, it requires a step of forming a large number of fine pores having a diameter of about 0.5 mm through warifu in order to make the packaging material air permeable. Additionally, the warifu layer and the paper layer adhere to each other only poorly so that the packaging material in fact requires sandwich lamination, using polyethylene resin, as described in the examples of the patent document. For these reasons, there may be a problem of difficulty of controlling the moisture permeability and the air permeability of the material.

As air permeable materials, micro-porous film layers obtained by extending polyethylene film containing an inorganic bulking agent are known. However, since the micro-porous film layers do not have a sufficient strength, it is known that they are mostly used as a material for forming multilayer materials with non-woven fabric.

### (3) Japanese Patent Publication No. 2736773

This published Japanese patent discloses a method of manufacturing a sheet-shaped material to be used for forming a windproof laminate that is prepared by bonding a sheet of air permeable filament spunbonded non-woven fabric with a mass per unit area of 30 to 100g/m² that carries adhesive applied thereto to a micro-porous film layer as described above with a non-contact area left unbonded, the sheet-shaped material being adapted to be used in a process of making the outer wall of a wooden house air permeable.

### (4) Japanese Patent Application Laid-Open Publication No. 4-348931

This patent document discloses a multilayer article formed by bonding a micro-porous film layer as described above having an air permeability of 5,000 seconds/100 cc or less and a thickness of 35 to 100 µm to nylon or polyester type non-woven fabric with a mass per unit area of 20 to 50 g/m² by spot bonding with an adhesive carrying area of 10 to 30%. It also describes applications of such a multilayer article including umbrellas.

### (5) Japanese Patent Application Laid-Open Publication No. 11-972

This patent document discloses a multilayer article obtained by using polyolefin type non-woven fabric with a mass per unit area of 5 to 20 g/m², an average fiber diameter of 0.2 to 2 deniers and a bulk specific gravity of 0.05 or less.

### (6) Japanese Patent Application Laid-Open Publication No. 11-99601

This patent document discloses a composite film whose bonded state realized by using a hot-melt adhesive agent is expressed by a numerical value. It also describes applications of such a composite film including back sheets of paper nappies and sanitary napkins.

All the above described multilayer materials employ an adhesive agent in a form or another and are therefore accompanied by a number of problems including a problem of a complex manufacturing process, environment-related problems, a problem of the smell of the adhesive agent and that of reduction or fluctuations of the air permeability and the moisture permeability. The following multilayer articles are proposed to avoid the above listed problems.

### (7) Japanese Patent Application Laid-Open Publication No. 6-316022

This patent document discloses a multilayer article of polyolefin type micro-porous film, polyolefin type non-woven fabric and polyolefin split fiber non-woven fabric that are integrally formed by thermal bonding.

### (8) Japanese Patent Application Laid-Open Publication No. 9-76386

This patent document discloses a moisture permeable multilayer sheet formed by laying micro-porous polyolefin moisture permeable resin film and non-woven fabric one on the other by means of partial thermal bonding as well as wears and moisture absorbing articles prepared by using such a multilayer sheet.

Moisture absorbing articles such as wears and disposable nappies obtained by way of a secondary process using a multilayer sheet prepared by thermal bonding as described above are not accompanied by serious problems in terms of heat-sealing effect and heat-sealing strength

More particularly, known multilayer materials obtained by using micro-porous polyolefin type resin film are intended to improve the strength and the heat-sealing effect of micro-porous polyolefin type resin film by means of lamination using non-woven fabric. Therefore, if an adhesive agent or a technique of thermal bonding is used as means for lamination, it does not give rise to any serious problem when air permeability and adhesion are secured to a satisfactory level.

However, when micro-porous polyolefin type resin film is used for packaging a functional agent such as a deoxidizing agent or a drying agent in place of paper, the sealing effect and the sealing strength of the packaging material are very important beside the effect of preventing fine powder from leaking. This is because packages of such a functional agent are packaged with food mainly for the purpose of preventing the food from being oxidized and absorbing moisture. Thus, the safety of the food is threatened when the deoxidizing agent or the drying agent contacts the food. Therefore, the packaging material needs to be reliably heat-sealed on a stable basis so that the deoxidizing agent or the drying agent may not leak out

Such reliable heat-sealing and efficient packaging of a package are strongly desired. However, there are cases where known two-layered multilayer materials cannot satisfactorily meet such requirements.

Therefore, it is a major object of the present invention to provide a packaging multilayer material that is waterproof, moisture permeable and appropriately air permeable and can be manufactured with ease, while having no problems such as a problem of reduced air permeability due to the adhesive used there and that of smell but having an excellent strength and providing advantages including an effect of preventing the packaged article from leaking, a good sealing effect when packaging an functional article such as a deoxidizing agent or a moisture absorbing agent, a high productivity and an adaptability to high speed continuous packaging operations and also a package formed by using such a laminate material.

Known air permeable packaging materials further include the following.

### (9) Mixed paper mainly made of pulp and thermally bonded fiber (high density polyethylene/polypropylene)

Such mixed paper does not show any difference of melting point between the front surface and the rear surface of the material and gives rise to a problem of contaminating the heat-sealing bar (die roll) during automatic packaging and that of a reduced printing effect of the front surface.

### (10) Laminate materials of paper and micro-porous sealant film

Such a laminate material does not give rise to any serious problem in terms of sealing strength but it is difficult to obtain a laminate, while maintaining the air permeability of paper.

Meanwhile, multilayer materials realized by using paper and non-woven fabric are also known. However, such materials are formed by laying resin film as outer layer or by laying paper and non-woven fabric realized by using extruded film of polyethylene type resin one on the other in order to provide necessary waterproof and sealing properties. Therefore, such materials are different from an air permeable packaging multilayer material according to the invention in terms of applications and composition.

Another object of the present invention is to provide a packaging multilayer material whose air permeability can be selectively realized and that is waterproof, moisture permeable and appropriately air permeable and can be manufactured with ease, while having no problems such as a problem of reduced air permeability due to the adhesive used there and that of smell but having an excellent strength and providing advantages including an effect of preventing the packaged article from leaking, a good sealing effect (in terms of sealing strength or adaptability to hot tucking in particular) when packaging an functional article such as a deoxidizing agent or a moisture absorbing agent, a high productivity and an adaptability to high speed continuous packaging operations and also a package formed by using such a multilayer material.

### Disclosure of the Invention

The inventors of the present invention intensively looked into the heat-sealing effect required to packages (bags) that show the moisture permeability, the air permeability and the waterproof effect of micro-porous film. As a result, the inventors found that a three-layered multilayer material having a layer of polyethylene type spunbonded non-woven fabric sandwiched between a micro-porous film layer and an air permeable heat-resistant fiber material layer can be formed with ease by thermal bonding and shows an excellent heat-sealing strength in a heat-sealing operation for forming a package. Such a laminate material is adapted to high speed continuous packaging operations to provide a high productivity and particularly suited for packaging various functional agents and deliquescent components that are used for packaging food items. The present invention is based on the above finding. The inventors also found that a material prepared by laying an air permeable material on the above described three-layered laminate material by means of thermal lamination shows an improved heat-sealing strength.

In an aspect, the present invention is defined as follows.

A packaging multilayer material according to the invention is characterized by sequentially laying an air permeable heat-resistant fiber material layer having a heat-resistance of not lower than 150 °C, a polyethylene type resin spunbonded non-woven layer and a micro-porous film layer in the above listed order by means of thermal bonding.

For the purpose of the invention, preferably, the air permeable heat-resistant fiber material layer is made of resin spunbonded non-woven fabric having a melting point between 150 and 300°C.

For the purpose of the invention, preferably, the polyethylene type resin is an ethylene- α - olefin copolymer having a density between 880 and 950 kg/m³.

For the purpose of the invention, preferably, the micro-porous film layer is made of polyethylene type resin.

A packaging multilayer material according to the invention is characterized by laminating an air permeable heat-resistant fiber material layer having a heat-resistance of not lower than 150 °C, a polyethylene type resin spunbonded non-woven fabric layer, a micro-porous film layer and an air permeable material in the above listed order by means of thermal bonding.

For the purpose of the invention, preferably the air permeable material is non-woven fabric.

For the purpose of the invention, preferably, the non-woven fabric is spunbonded non-woven fabric or split fiber non-woven fabric.

For the purpose of the invention, preferably, the air permeable heat-resistant fiber material layer is made of resin spunbonded non-woven fabric having a melting point between 150 and 300°C.

For the purpose of the invention, preferably, the polyethylene type resin is an ethylene-α -olefin copolymer having a density between 880 and 950 kg/m³.

For the purpose of the invention, preferably, the micro-porous film layer is made of polyethylene type resin.

The inventors of the present invention intensively looked into the heat-sealing effect and the hot tuck effect required to packages (bags) that also provide the advantages of paper including air permeability and printability at the same time. As a result, the inventors found that a multilayer material adapted to packaging can be easily obtained by thermal bonding when paper is used for the surface layer and a specific non-woven fabric is used for the seal layer. Such a multilayer material provides advantages including an excellent sealing strength, a high hot tuck effect and adaptability to high speed continuous packaging operations. Additionally, such a laminate material shows a further improved heat-sealing effect when a heat-resistant fiber material layer is formed on the non-woven fabric side to make it possible to package a large and heavy article.

Thus, in another aspect, the present invention is defined as follows.

A packaging multilayer material according to the invention is characterized by sequentially laying an air permeable heat-resistant fiber material layer having a heat-resistance of not lower than 150°C, a polyethylene type resin spunbonded non-woven fabric layer and a paper layer in the above listed order by means of thermal bonding.

For the purpose of the invention, preferably, the polyethylene type resin spunbonded non-woven fabric layer and the paper layer are sequentially laid one on the other in the above listed order by means of thermal bonding.

For the purpose of the invention, preferably the air permeable heat-resistant fiber material layer is made of resin spunbonded non-woven fabric having a melting point between 150 and 300°C.

For the purpose of the invention, preferably, the polyethylene type resin is an ethylene- α -olefin copolymer having a density between 880 and 950 kg/m³.

In still another aspect of the invention, there is provided a package using a packaging multilayer material according to the invention and containing a deoxidizing agent, a drying agent, a moisture absorbing agent, a deodorant, a heat generating agent, an insecticide, a desiccating agent or an aromatic agent

While known raw materials and manufacturing methods may appropriately be used to realize a packaging multilayer material according to the invention, specific raw materials and manufacturing methods that can be used for the purpose of the invention will be described below in detail.

### [air permeable heat-resistant fiber material layer having heat-resistance not lower than 150°C]

For the purpose of the invention, fiber made of thermoplastic resin is generally used for the air permeable heat-resistant fiber material layer having a heat-resistance of not lower than 150°C. Fibers that can be used for the air permeable heat-resistant fiber material layer include polypropylenes such as homopolymers of propylene and random copolymers of propylene and a monomer such as ethylene or butene-1 that is contained by 5 mass% or less, polyester fibers prepared from homopolyesters such as polyethyleneterephthalate, polybutyleneterephthalate or polytrimethyleneterephthalate, copolyesters obtained by copolymerization using such a polymer as main ingredient along with other ingredients and mixed polyesters that are mixtures of such polyesters and polyamide fibers such as nylon 6 (polycaprolactamide), nylon 6,6 (polyhexamethyleneadipoamide), nylone 6,10 (polyhexamethylenesebacamide), nylon 11 (polyundecanamide), nylon 7 (poly- ω -aminoheptanoic acid), nylon 9 (poly- ω -aminononanoic acid) and nylon 12 (polylauricamide).

Fiber materials other than thermoplastic resin fibers include those that are not molten such as wooden pulp, paper mulberry, paper birch and rayon fibers.

The air permeable heat-resistant fiber material layer is made of any of such heat-resistant fiber materials that include woven fabrics, non-woven fabrics, knit fabrics and paper without limitations. However, spunbonded non-woven fabric made of thermoplastic resin is preferably used from the viewpoint of strength, expandability, flexibility and low cost.

The filament diameter of the spunbonded non-woven fabric that is used for the air permeable heat-resistant fiber material layer is not subject to any limitations. Normally, it is between 5 and 60 µm, preferably between 10 and 40 µm. The mass per unit area of the spunbonded non-woven fabric that is used for the air permeable heat-resistant fiber material layer is normally between 10 and 100 g/m², preferably between 15 and 80 g/m². The effect of preventing edges from being cut is not sufficient during the heat-sealing operation if the mass per unit area is less than 10 g/m², whereas the productivity of the process of forming the multilayer material by thermal lamination is undesirably reduced if the mass per unit area is more than 100 g/m². More specifically, in the process of forming the multilayer material, the polyethylene type resin spunbonded non-woven fabric layer is molten and penetrates into the heat-resistant fiber material layer and thermally bonded to the micro-porous film layer to form a multilayer structure. Thus, the material of the heat-resistant fiber material layer is selected by taking the required sealing strength and the productivity of the multilayer structure forming process into consideration.

Any known technique may be used for manufacturing spunbonded non-woven fabric that is used for the air permeable heat-resistant fiber material layer. For example, firstly the resin material for forming the spunbonded non-woven fabric is molten, extruded by means of an extruder and spun out from a spinneret Then, the spun fiber is taken up by an air flow traction device such as air sucker and, if necessary, subjected to an opening step before it is caught by a web capturing device such as a net conveyor and, if necessary, the filaments of the fiber are partially bonded by using a heating means such as hot air or a heated roll.

Another non-woven fabric layer may be laid on the spunbonded non-woven fabric on an in-line basis.

### [polyethylene type spunbonded non-woven fabric layer]

For the purpose of the invention, the polyethylene type spunbonded non-woven fabric layer is not subject to any particular limitations. Materials that can be used for the polyethylene type spunbonded non-woven fabric layer include monopolymers of ethylene, copolymers of ethylene and a copolymerizing monomer such as α -olefin, unsaturated carbonic acid or a derivative thereof, or a cyclic olefin and low density polyethylene branched by means of a high pressure method. Particularly, copolymers (LLDPE) of ethylene and an α -olefin having three to ten carbon atoms such as propylene, butene-1, 4-methyl-pentene-1, hexene-1 or octene-1 may preferably be used. Such polyethylene type resins may be prepared by using (co)polymers obtained by polymerization using a Ziegler catalyst, or (co)polymers obtained by polymerization using a metallocene type catalyst.

Particularly, ethylene- α -olefin copolymers having a density preferably between 880 and 960 kg/m³, more preferably between 900 and 950 kg/m³, a melting point between 80 and 140°C, preferably between 90 and 130°C, and a melt flow rate (MFR) between 5 and 60 g/10min, preferably between 10 and 50 g/10min, may preferably be used from the viewpoint of spinning effect, melting point, strength and so on.

The polyethylene type resin spunbonded non-woven fabric layer has a filament diameter normally between 50 and 60 µm, preferably between 10 and 40 µm, and a mass per unit area between 10 and 200 g/m², preferably between 15 and 150 g/m², more preferably between 20 and 100 g/m².

The above described process of manufacturing spunbonded non-woven fabric to be used for the air permeable heat-resistant fiber material layer can also be used for manufacturing spunbonded non-woven fabric to be used for the polyethylene type spunbonded non-woven fabric layer.

### [micro-porous film layer]

For the purpose of the invention, the micro-porous film layer is not subject to any particular limitations. Any known manufacturing process may be used for it so long as it is an ordinary polyolefin type resin micro-porous film layer, a polyethylene type resin micro-porous film layer in particular. For example, a polyolefin type resin micro-porous film layer can be prepared by bringing in film of polyolefin type resin that contains organic or inorganic bulking agent or a plasticizing agent and eluting the bulking agent or the plasticizing agent by means of solvent or by drawing film of polyolefin type resin containing an inorganic or organic bulking agent at least in an axial direction.

Above all, film obtained by drawing film of polyolefin type resin containing an inorganic or organic bulking agent at least in an axial direction is preferably used for the purpose of the invention. Polyolefin type resin materials that can be used for the purpose of the invention include copolymers of high density polyethylene, medium density polyethylene, ethylene- α -olefin copolymer, low density polyethylene branched by means of a high pressure method, polypropylene or propylene and other olefin and mixtures of such polyolefin compounds, of which a polyethylene type resin may preferably by used.

The density of the polyethylene type resin of the micro-porous film layer is normally between 880 and 960 kg/m³, preferably between 900 and 950 kg/m³, and the melt flow rate (MFR) thereof [as observed by a method conforming to JIS K7210, measuring temperature: 190°C, measuring load: 21.18N] is normally between 0.01 and 10 g/10min, preferably between 0.02 and 5 g/10min.

An organic or inorganic bulking agent is used for the bulking agent that is contained in the polyolefin type resin. Examples of bulking agents that can be used for the purpose of the invention include inorganic bulking agents such as calcium carbonate, talc, clay, kaolin, silica, diatom earth, magnesium carbonate, barium carbonate, barium sulfate, calcium sulfate, calcium sulfite, calcium hydroxide, magnesium hydroxide, aluminum hydroxide, zinc oxide, calcium oxide, magnesium oxide, titanium oxide, mica, alumina, zeolite and glass powder and organic bulking agent such as wood powder, cellulose powder, high melting point resin powder and bridged resin powder.

The average grain diameter of the bulking agent is normally not more than 30 µm, preferably between 0.2 and 10 µm. The dispersibility and the moldability are degraded when the grain diameter is too small, whereas the concentration of micro-pores of the drawn film is reduced to possibly lower the resistance against leak of powder, The polyolefin type resin may be made to contain more than one bulking agents. The bulking agent may be surface-treated with fatty acid or metal salt of fatty acid in order to improve the dispersibility of the agent into the polyolefin type resin and the drawability of the film.

The content of the inorganic bulking agent is between 20 and 400 mass portions, preferably between 40 and 300 mass portions, relative to 100 mass portions of the polyolefin type resin. Micro-pores are not formed satisfactorily and a sufficient moisture permeability is not secured when the film is drawn if the content of the bulking agent is lower than 20 mass%, whereas the mulling performance of the mixture, the dispersability, the effect of forming film and the strength are reduced if the content of the bulking agent exceeds 400 mass portions.

If necessary, other resin, elastomer and/or one or more than one additives that are commonly used with polyolefin type resin containing a bulking agent may be added to the polyolefin type resin. Examples of such substances include ethylene-propylene copolymeric elastomers, liquid or solid hydrocarbon resins, active-hydrogen-containing liquid polybutadiene, plasticizers, radical generating agents, thermal stabilizers, ultraviolet absorbing agents, smoothing agents such as higher fatty acids, esters thereof, amides thereof and metal salts thereof, coloring agents and flame retardants.

Polyolefin type resin is pelletized with a bulking agent that is added at a predetermined rate along with various additives by means of a Banbury mixer, a mulling extrusion molding machine or the like. Film is formed from the pellets by means of a T-die extrusion molding machine, an inflation molding machine or the like. The produced film is then drawn at least along an axis thereof so as to show a length about 1.5 to 10 times greater than the original value. The drawing operation may be conducted in a plurality of steps. The film may be biaxially drawn.

The operation of drawing polyolefin type resin is conducted in a temperature range between a level lower than the melting point thereof by 100°C and a level lower than the melting point thereof by 20°C. The strength of the film is improved and micro-pores are formed in the film as a result of the drawing operation. The dimensional accuracy of the film can be improved as a result of the heat treatment of the drawn film. Further, multilayer surface of the film may be surface-treated with corona treatment or frame treatment in order to improve the adhesiveness.

The thickness of the obtained polyolefin type resin micro-porous film layer is between 10 and 200µm, preferably between 15 and 100 µm. The moisture permeability of the film is normally not less than 100 g/m²·24hours, preferably not less than 500 g/m²·24hours. The gauging method will be described hereinafter. For the polyolefin type resin micro-porous film layer to meet the above requirements, it preferably has micro-pores with an average diameter between 0.1 and 50 µm and shows a percentage of void between 10 and 80%.

The thickness and the moisture permeability of the polyolefin type resin micro-porous film layer can be determined depending on the article to be packaged by the multilayer material according to the invention and the application of the article so long as the film layer meets the above requirements.

Such a polyolefin type resin micro-porous film layer itself is known and various such films are commercially available. For example, moisture permeable drawn polyethylene film containing an inorganic bulking agent is marketed by Tokuyama Corporation with the tradename of "PORUM PU35", by Nitto Denko Corporation with the tradename of "BREATH-RON" and also by Mitsui Chemicals Co., Ltd. with the tradename of "Espoir".

### [air permeable material]

For the purpose of the invention, the air permeable material is selected from air permeable materials that can be thermally laminated with micro-porous film and have strength sufficient for operating as protection layer of the micro-porous film in order to prevent edges from being cut during the heat-sealing operation.

The air permeability of the air permeable material is not higher than 100 sec/100cc, preferably not higher than 10 sec/100cc as gauged by a method conforming to JIS L 1096. The moisture permeability of the material falls remarkably when the air permeability exceeds 100 sec/100cc so that it may not satisfactorily absorb moisture and hence no longer operate as moisture removing agent

Non-woven fabric is typically used for the air permeable material. The method for manufacturing the air permeable material may be selected from known methods including the spun-bonding method, the spun-lacing method, the hot air carding method and the thermal embossing method, of which the spun-bonding method may preferably be used for the purpose of the invention from the viewpoint of strength and cost The mass per unit area is between 10 and 100 g/m², preferably between 15 and 70 g/m², from the viewpoint of strength and cost.

If non-woven fabric is used, the air permeable material layer may be a single layer or a multilayer. A multilayer non-woven fabric of high melting point resin non-woven fabric layer/low melting point resin non-woven fabric layer may preferably be used for the purpose of the invention in view of the thermal laminate manufacturing process.

The material of the non-woven fabric may be selected from known resin materials including PP, polyolefin materials such as PE, polyamide materials such as NY and polyester materials such as PET. When multilayer non-woven fabric is used, a combination of PET non-woven fabric/PE non-woven fabric may be preferable from the viewpoint of differentiating the melting points of the layers.

Non-woven fabrics that can be used for the purpose of the invention may comprise a core made of polyethyleneterephthalate or polybutyleneterephthalate that is coated with polyolefin resin.

Examples of air permeable materials that can be used for the purpose of the invention include warifus. Wanifus non-woven fabrics that are formed by splitting drawn film of polyolefin resin to produce split fibers (flat yarns), laying split fibers longitudinally and transversally and thermally bonding them or hot-melt bonding them.

The mass per unit area of warifu is between 10 and 100 g/m², preferably between 12 and 40g/m², from the viewpoint of strength and cost

From the viewpoint of adaptability to manufacture of thermal laminates, multilayer type drawn film of low melting point resin layer/high melting point resin layer/low melting point resin layer is preferably used for the purpose of the invention.

The use of low density polyethylene/high density polyethylene/low density polyethylene is preferable as material that can thermally laminated with micro-porous film.

### [paper layer]

For the purpose of the invention, the paper of the paper layer is not subject to any particular limitations. Examples of paper that can be used for the purpose of the invention include ordinary paper and Japanese paper made from one or more than one different types of fiber selected from pulp, kozo, mitsumata, natural cellulose, regenerated cellulose, rayon, acetate and so on. The type of paper may be appropriately selected by taking the type of the object to be packaged, the degree of powderization, the air permeability and the shape and the size of the package into consideration.

The mass per unit area of the paper is normally between 10 and 100 g/m², preferably between 12 and 70 g/m². The mass per unit area may be appropriately selected by taking the type of the object to be packaged, the degree of powderization, the air permeability and the shape and the size of the package into consideration.

### [multilayer forming process]

A packaging multilayer material according to the invention is formed by sequentially laying a micro-porous film layer or a paper layer, a polyethylene type resin spunbonded non-woven fabric layer and an air permeable heat-resistant fiber material layer have a heat-resistance of not lower than 150°C and bonding them by way of a thermal bonding process, which is preferably the thermal embossing roll method.

Two of the layers may be laid one on the other in advance. The operation of laying two layers in advance may be performed by way of the thermal flat roll method or, preferably, the thermal embossing roll method. Particularly, when spunbonded non-woven fabric having a melting point between 150 and 300°C is used for the heat-resistant fiber material layer, the operation of laying a polyethylene type resin spunbonded non-woven fabric layer and a spunbonded non-woven fabric layer made of polypropylene, polyamide or polyester one on the other may be conducted on an in-line basis or, alternatively, the layers may be integrally formed when they are laid on a micro-porous film layer or a paper layer in a subsequent step.

The meaning of providing an air permeable heat-resistant fiber material layer is that, when a polyethylene type spunbonded non-woven fabridc layer is laid on a micro-porous film layer or a paper layer by means of the thermal embossing roll method, the temperature of one of the rolls can be selected without allowing the thermal bonding temperature (roll temperature) to be significantly affected by the melting point of the polyethylene type resin spunbonded non-woven fabric. Therefore, a wide temperature range can be secured for the thermal bonding and the efficiency of forming multilayer structures is remarkably improved.

Further, the heat-resistant fiber material layer is not molten and keeps a strength, thus edges are prevented from being cut at the time of heat sealing of packages. As a result, a packaging multilayer material shows an excellent sealing effect

The melting point of each of the thermal plastic resins constituting the non-woven fabrics and the films that are used for the purpose of the invention may be defined to be the peak temperature observed when the temperature rising rate is gauged by means of a DSC (DSC 7 type: tradename, available from Perkin Elmer), using a gauging process conforming to JIS K 7121. When the melting point appears as a plurality of peaks, the highest peak is used. The melt flow rate (MFR) of the polyethylene type resin can be gauged by a method conforming to JIS K 7210 under the conditions of measuring temperature: 190°C and measuring load: 21.18N.

Thus, a packaging multilayer material according to the invention may be formed firstly by laying an air permeable heat-resistant fiber material layer on a polyethylene type resin spunbonded non-woven fabric layer, by laying a polyethylene type resin spunbonded non-woven fabric layer on a micro-porous film layer or by laying a polyethylene type resin spunbonded non-woven fabric layer on a micro-porous film layer or a paper layer depending on the intended layered structure. Two of the layers may be laid one on the other in advance or all the layers may be bonded together simultaneously by thermal bonding.

Any known multilayer structure forming method may be used to form a packaging multilayer material according to the invention. However, the thermal embossing roll method is preferably used for forming a packaging multilayer material according to the invention because, with this method, the packaging multilayer material is formed by thermal bonding and no adhesive agent is used there so that the manufactured packaging multilayer material is free from smell due to the use of an adhesive agent and additionally also free from any possible reduction of air permeability, while it can be formed with ease at low cost and the method is friendly to the environment.

With the thermal embossing roll method, a known laminating apparatus comprising an embossing roll and a flat roll may be used. The embossing roll may carry a desired embossing pattern. Available patterns include a lattice-shaped pattern where the bonding sections are continuously formed, a lattice-shaped pattern where the bonding sections are held independent from each other and a pattern where the bonding sections are distributed arbitrarily.

The conditions under which the thermal embossing roll method is used for forming a multilayer structure may vary depending on the type and the melting point of each of the micro-porous film layer, the paper layer, the polyethylene type resin spunbonded non-woven fabric layer and the heat-resistant fiber material layer, the difference of the melting points of the layers, the selected layer for embossing and so on and determined appropriately by taking the related factors into consideration. Normally, the polyethylene type resin spunbonded non-woven fabric layer is placed at the embossing roll side and the micro-porous film layer or the paper layer is placed at the flat roll side when forming a multilayer structure by thermal bonding.

As an example, the temperature of the embossing roll is normally between 90 and 200°C, preferably between 110 and 180°C and the temperature of the flat roll is normally between 90 and 200°C, preferably between 110 and 180°C, whereas the roll pressure (linear pressure) is normally between 100 and 500 N/cm, preferably between 200 and 400 N/cm. Note, however, that the embossing pattern, the percentage of the embossing area, the temperature and the pressure may be selected appropriately depending on the melting point, the filament diameter, the thickness, the mass per unit area, the air permeability and the multilayer structure forming rate of the non-woven fabric.

### [requirements to be met by multilayer material]

A packaging multilayer material according to the invention is required to be appropriately air permeable and moisture permeable to such an extent that the functional agent contained in it can operate properly The air permeability and moisture permeability may vary depending on the type of the functional article, the size of the package and the application of the functional article. Generally, the materials of the layers are selected in such a way that the moisture permeability is held to be less than 50 g/m²·24hours and the contents may not leak out.

A packaging multilayer material according to the invention can be used to package a functional article mainly selected from deoxidizing agents and moisture absorbing agents. In the case of a bag-shaped package, at least part of the bag, preferably a side of the bag is formed by a packaging material according to the invention. Any heat-sealing method adapted to heating thermoplastic resin and bonding it under pressure may be used without limitations for the purpose of the invention. Heat-sealing methods that can be used for the purpose of the invention include a method using a hot sealing bar and the continuous sealing method that is popularly used in the field of bag manufacturing and sewing. Thermal conduction (heat jig, heat generating body), dielectric heating or ultrasonic heating may be used as heating means for the purpose of the invention.

The temperature, the pressure, the duration and the rate of heat-sealing operation may be selected appropriately depending on the type, the heat-resistance (melting point), the molecular weight, the thickness and the mass per unit area of the polyethylene type resin spunbonded non-woven fabric, those of the air permeable heat-resistant fiber material layer, and those of the micro-porous film.

A packaging multilayer material according to the invention can suitably be used for packaging a functional article that may be a deoxidizing agent, a drying agent, a moisture absorbing agent, a deodorant, a heat generating agent, an insecticide, a desiccating agent or an aromatic agent Particularly, because a packaging multilayer material according to the invention shows an excellent sealing effect, it can be applied to sheet-shaped packages having a relatively large surface area and adapted to contain a deodorant such as charcoal or active carbon. For such an application, a number of sheet-shaped packages will be continuously formed.

### Brief Description of the Drawings

FIG 1 is a schematic illustration of a thermal laminating apparatus that can be used for the first embodiment of the invention;
FIG 2 is a schematic cross sectional view of the first embodiment of packaging multilayer material;
FIG 3 is a schematic illustration of a thermal laminating apparatus that can be used for the second embodiment of the invention; and
FIG 4 is a schematic cross sectional view of the embodiment of packaging multilayer material of FIG 3.

### Best Mode for Carrying Out the Invention

Now, the present invention will be described by referring to the accompanying drawings that illustrate preferred embodiments ofthe invention.

### [1st Embodiment]

The first embodiment is a three-layered packaging multilayer material having an air permeable heat-resistant fiber material layer, a polyethylene type resin spunbonded non-woven fabric layer and a micro-porous film layer.

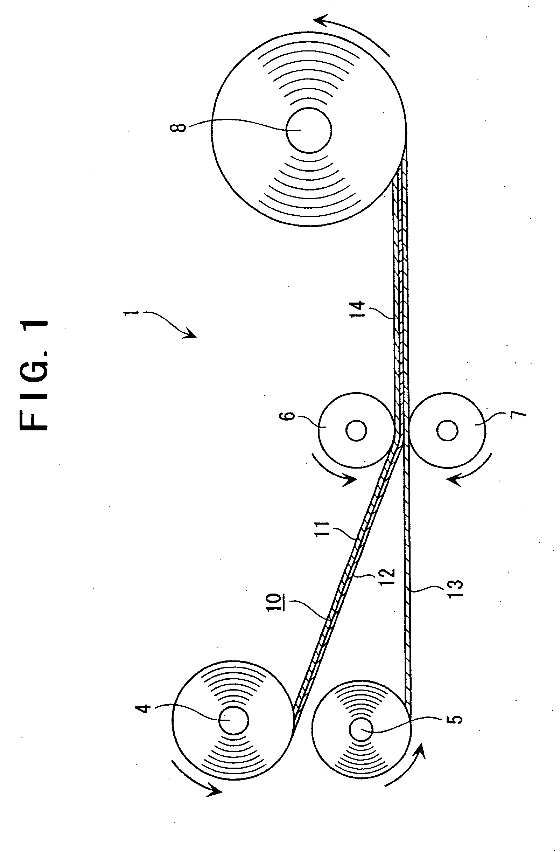

FIG 1 is a schematic illustration of a thermal laminating apparatus 1 that can be used for the first embodiment of the invention.

The thermal laminating apparatus 1 comprises a feed roll 4 for feeding a multilayer sheet 10, another feed roll 5 for feeding a micro-porous sheet 13, a flat roll 6 and an embossing roll 7 for pinching the multilayer sheet 10 and the micro-porous sheet 13 under pressure and a take up roll 8 for taking up the produced packaging multilayer material 14.

The multilayer sheet 10 is formed in advance by laying a polyethylene type resin spunbonded non-woven fabric 12 and an air permeable heat-resistant fiber material 11 one on the other by means of thermal lamination.

The feed rolls 4, 5 and the take up roll 8 may be made of any materials so long as they operate properly to achieve the intended object

The flat roll 6 has a smooth surface and is provided with a heating means that can change the temperature thereof in a desired manner. It is placed on the sheets to be pinched by it under pressure . Additionally, the flat roll 6 may be connected to a drive means such as a motor and driven to rotate.

The embossing roll 7 carries on the surface thereof a desired embossing pattern and is provided with a heating means that can change the temperature thereof in a desired manner. It is placed under the sheets to be pinched by it under pressure.

The packaging multilayer material 14 that is produced from the gap between the flat roll 6 and the embossing roll 7 after raising the temperature of the flat roll 6 and that of the embossing roll 7 is formed by laying an air permeable heat-resistant fiber material 11, a polyethylene type resin spunbonded non-woven fabric 12 and a micro-porous sheet 13 in the above mentioned order as viewed from the flat roll 6.

A predetermined embossing pattern is formed on the surface of the micro-porous sheet 13 by the embossing roll 7.

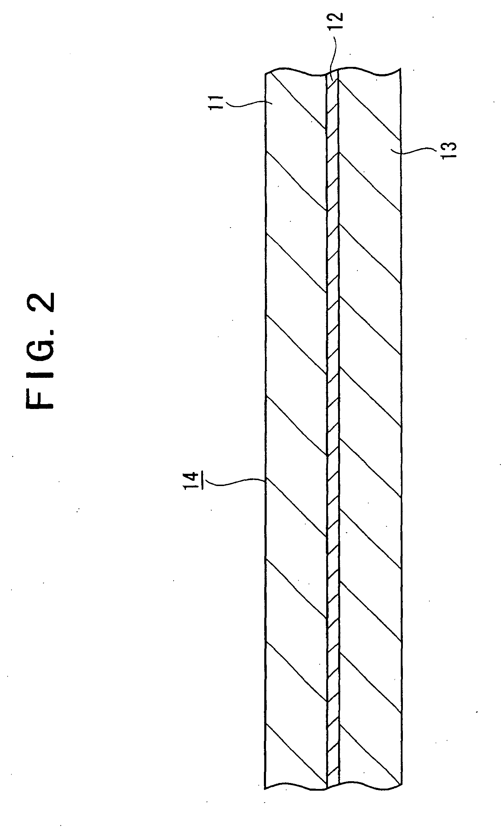

Thus, as shown in FIG 2, the finished packaging multilayer material 14 has a layer of the air permeable heat-resistant fiber material 11, a layer of the polyethylene type resin spunbonded non-woven fabric 12 and a layer of the micro-porous sheet 13.

Packages (not shown) containing silica gel are manufactured by using the packaging multilayer material 14 obtained in a manner as described above. At the time of manufacturing, each packaging multilayer material 14 is sealed along the periphery thereof by a heat-sealing means.

Thus, this embodiment provides the following advantages.

A packaging multilayer material 14 according to the invention is air permeable and moisture permeable and shows a barrier effect against fine powder and also an excellent sealing effect. Therefore it is suited for packaging a functional article such as a deoxidizing agent or a moisture absorbing agent Additionally, since no adhesive agent is used for forming the multilayer material, the manufacturing process is an easy one and the product is free from degradation of air permeability, that of moisture permeability and smell and hence can be used to package a wide variety of functional articles.

### [2nd Embodiment]

The second embodiment is a four-layered packaging multilayer material having an air permeable heat-resistant fiber material layer, a polyethylene type resin spunbonded non-woven fabric layer, a micro-porous film layer and an air permeable material layer.

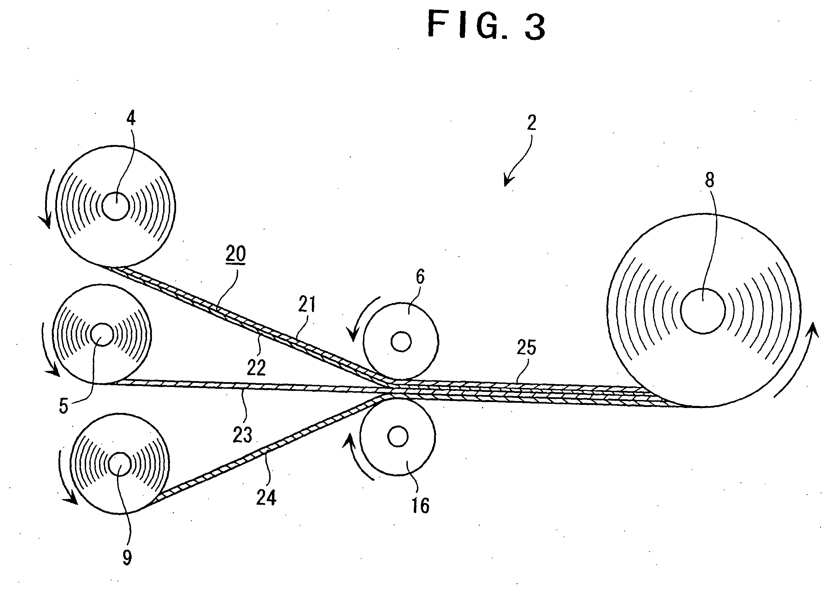

FIG 3 is a schematic illustration of a thermal laminating apparatus 2 that can be used for the second embodiment of the invention. In the following description, the components same as those of the first embodiment are denoted respectively by the same reference symbols and will not be described any further.

The thermal laminating apparatus 2 comprises a feed roll 4 for feeding a multilayer sheet 20, another feed roll 5 for feeding a micro-porous sheet 23, still another feed roll 9 for feeding an air permeable material 24, flat rolls 6, 16 for pinching the multilayer sheet 20, the micro-porous sheet 13 and the air permeable material 24 under pressure and a take up roll 8 for taking up the produced packaging multilayer material 25.

The multilayer sheet 20 is formed in advance by laying a polyethylene type resin spunbonded non-woven fabric 22 and an air permeable heat-resistant fiber material 21 one on the other by means of thermal lamination.

The feed rolls 9 may also be made of any materials so long as it operates properly to achieve the intended object

Like the flat roll 6, the flat roll 16 has a smooth surface and is provided with a heating means that can change the temperature thereof in a desired manner. It is placed under the sheets to be pinched by it under pressure.

The packaging multilayer material 25 that is produced as a result of the thermal laminating operation is formed by laying an air permeable heat-resistant fiber material 21, a polyethylene type resin spunbonded non-woven fabric 22, a micro-porous sheet 23 and an air permeable material 24 in the above mentioned order as viewed from the flat roll 6.

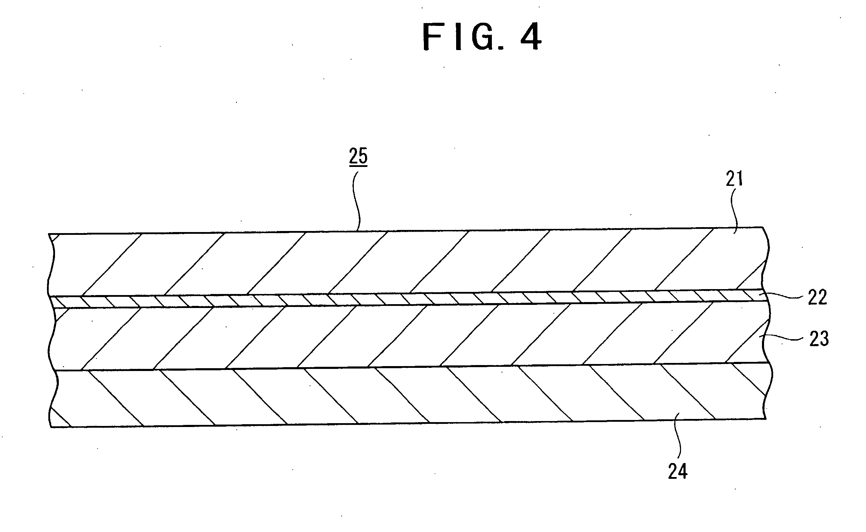

Thus, as shown in FIG 4, the finished packaging multilayer material 25 has a layer of the air permeable heat-resistant fiber material 21, a layer of the polyethylene type resin spunbonded non-woven fabric 22, a layer of the micro-porous sheet 23 and a layer of the air permeable material 24.

This embodiment provides the following advantage in addition to the advantages of the first embodiment.

As a layer of an air permeable material 24 added to the packaging multilayer material 25, the latter shows an improved strength and its edges are prevented from being cut during the heat-sealing operation.

### [3rd Embodiment]

The third embodiment is a three-layered packaging multilayer material having an air permeable heat-resistant fiber material layer, a polyethylene type resin spunbonded non-woven fabric layer and a paper layer.

Such a three-layered multilayer material can be manufactured by using a thermal laminating apparatus 1 as described above by referring to the first embodiment (see FIG 1). Note that, however, a roll carrying not a micro-porous sheet 13 but a paper sheet is used for the feed roll 5. Then, a multilayer sheet 10 of an air permeable heat-resistant fiber material 11 and a polyethylene type resin spunbonded non-woven fabric 12 fed out from the feed roll 4 and a paper sheet (13) fed out from the feed roll 5 are thermally bonded together to produce a three-layered packaging multilayer material.

This embodiment is a packaging multilayer material that provides a good sealing effect and an excellent productivity as well as the air permeability and the printing effect specific to paper.

### [4th Embodiment]

The fourth embodiment is a two-layered packaging multilayer material having only a polyethylene type resin spunbonded non-woven fabric layer and a paper layer.

Such a two-layered multilayer material can be manufactured by a known thermal laminating apparatus. Alternatively, a thermal laminating apparatus 1 as described above by referring to the first embodiment (see FIG. 1) may be used. Note, however, that a roll carrying only polyethylene type resin spunbonded non-woven fabric 12 is used for the feed roll 4 in place of a roll carrying a multilayer sheet 10 of an air permeable heat-resistant fiber material 11 and a roll carrying not a micro-porous sheet 13 but a paper sheet is used for the feed roll 5. Then, the two layers of the raw materials are thermally bonded.

This embodiment is a packaging multilayer material that provides a good sealing effect and an excellent productivity as well as the air permeability and the printing effect specific to paper. Particularly, it is structurally simple and hence ideally suited for light packages because it only has two layers including a paper layer.

A packaging multilayer material according to the invention will be described in greater detail below by way of examples and examples for comparison, although the present invention is by no means limited thereto.

### [Example 1]

A three-layered packaging multilayer material 14 was prepared by using a thermal laminating apparatus 1 as described above for the first embodiment

The thermal laminating apparatus 1 was a thermal laminating machine marketed by Sansei Seiki Co., Ltd. [oil temperature regulation type, roll diameter: 300mm, embossing roll/flat roll, percentage of embossing contact area: 21 %, lattice pattern (pitch: 1.5mm), embossing pressure (linear pressure): 300N/cm, laminating rate: 15m/min].

Firstly, polyethylene type spunbonded non-woven fabric available from Idemitsu Petrochemical Co., Ltd. ["STRATEC" LN5020 (raw material: ethylene-butene-1 copolymer with density: 940 kg/m³, filament diameter: 25 µm, mass per unit area: 20 g/m², melting point: 124°C)] was used for the polyethylene type resin spunbonded non-woven fabric 12 and polyester spunbonded non-woven fabric available from Toyobo Co., Ltd. ["Ecule A" 6301 (mass per unit area: 30 g/m², melting point: 260°C)] was used for the air permeable heat-resistant fiber material layer 11, which two layers were thermally laminated to obtain a two-layered multilayer sheet 10.

Then, drawn PE moisture, film " 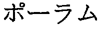 PU35" (thickness: 35 µm) containing inorganic filler available from Tokuyama Corporation was used for the micro-porous film layer 13 and placed at the side of the polyethylene non-woven fabric 12 of the two-layered multilayer sheet 10. The film surface was used surface to be embossed and all the layers were put together by thermal lamination to produce a three-layered packaging multilayer material 14.

It was possible to conduct the thermal bonding operation with emboss roll temperature: 85°C and a wide temperature range between 115 and 155°C for the flat roll.

The obtained packaging multilayer material 14 was assessed for the following physical properties.

### (1) bonding strength

The bonding strength was observed by means of a tensile test machine with a pulling rate of 200 mm/min and a peeling angle of 180 degrees (T-peeling), using a sample width of 50 mm and a chuck interval of 50 mm and the average was obtained for N = 5.

As a result, it was found that the bonding strength was about 1.1 to 2.4 N/50mm in the longitudinal direction.

### (2) tensile strength

The tensile strength was observed by a method conforming to JIS L 1906.

As a result, it was found that the tensile strength was longitudinally 62 to 64 N/50mm and transversally 35 to 36 N/50mm.

### (3) moisture permeability

The moisture permeability was observed by a method conforming to JIS Z 0208 (cup method).

As a result, it was found that the moisture permeability was 2,500 to 5,000 gm²·24hours.

### (4) water pressure resistance

The resistance against water pressure was observed by a method conforming to JIS L 1092 (high water pressure method).

As a result, it was found that the resistance against water pressure was not lower than 20 kPa under any conditions.

### (5) sealing strength

A thermal gradient testing machine was used to heat-seal the surfaces of the micro-porous film layers of the multilayer material under heat-sealing conditions of heat-sealing temperature: 180°C, sealing bar: 15mm × 15mm, sealing pressure 40N and sealing time: 1 second.

As a result, it was found that the heat-sealing strength was 11 N/15mm.

### [Example 2]

The three-layered multilayer material obtained in Example 1 was used to continuously package 100mm × 60mm pieces of a drying agent (silica gel) at a rate of 60 shots/min at heat-sealing temperature of 180°C.

As a result, it was possible to obtain good packages in which no silica gel was drawn into the sealing sections and that showed a sealing strength of 12 N/15mm width.

### [Example 1 for Comparison]

For the purpose of comparing with Example 2, packages were prepared by using a packaging material having a single micro-porous film layer, a two-layered multilayer packaging material having a micro-porous film layer and a polyethylene non-woven fabric layer and a packaging material of flash spinning non-woven fabric "TYVEK" [tradename; available from Asahi DuPont Flashbond Products Co., Ltd.] with mass per unit area of 46 g/m².

As a result, it was found that bags could not be formed due to cut edges. Additionally, the sealing bar was smeared.

### [Example 3]

A packaging multilayer material 25 was prepared by using a thermal laminating apparatus 2 as described above by referring to the second embodiment "STRAMIGHTY ME 1045 (mass per unit area of 45 g/m²)" available from Idemitsu Unitech was used for the multilayer sheet 20 of an air permeable heat-resistant fiber material 21 and a polyethylene type resin spunbonded non-woven fabric 22 and drawn polyethylene film containing an inorganic filler (thickness: 35 µm) available from Tokuyama Corporation with the tradename of " 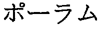 PU35" was used for the micro-porous sheet 23, while above described ''STRAMIGHTY ME1045" (PET spunbonded layer/LLDPE spunbonded layer) available from Idemitsu Unitech was used for the air permeable material 24.

The multilayer non-woven fabric ME1045 was fed out in such a way that the LLDPE spunbonded layer comes to meet the bonding surface of the micro-porous sheet 23 to obtain a packaging multilayer material 25.

For the forming operation, flat rolls 6, 16 were used with roll temperature of 140°C for the flat roll 6 and 115°C for the flat roll 16 and the operation was conducted at a processing rate of 25 m/min under linear pressure of 25 kg/cm.

### [Example 4]

A packaging multilayer material 25 was prepared under conditions same as those of Example 3 except that polyolefin type flat yam biaxial thermally bonded type multilayer non-woven fabric "sohu HM55 (mass per unit area of 32 g/m²" available from Sekisui Chemicals Co., Ltd. was used for the air permeable material 24.

The specimens of Examples 3 and 4 were assessed for the following physical properties.

### (1) tensile strength

The tensile strength was observed by a method conforming to JIS L 1906.

As a result, it was found that the tensile strength of Example 3 was 140 N/50mm in the MD and 80 N/50mm in the TD, whereas that of Example 4 was 400 N/50mm in the MD and 380 N/50mm in the TD. Note that MD is the film moving direction and the TD is a direction perpendicular to the MD.

### (2) moisture permeability

The moisture permeability was observed by a method conforming to JIS Z 0208 (cup method).

As a result, it was found that the moisture permeability of Example 3 was 4,000 g/m²·24hours and that of Example 4 was 4,200 gm²·24hours

### (3) water pressure resistance

The resistance against water pressure was observed by a method conforming to JIS L 1092 (high water pressure method).

As a result, it was found that the resistance against water pressure of both Example 3 and Example 4 was not lower than 50 kPa.

### (4) air permeability

The air permeability was observed by a method conforming to JIS L 1096 ( 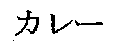 method).

As a result, it was found that the air permeability of Example 3 was 650 seconds and that of Example 4 was 600 seconds.

### (5) sealing strength

Each of the specimen to be assessed was sealed with dry laminate film (ONY 15 µm/LL 50 µm). Note that ONY represents drawn nylon and LL represents LLDPE (linear low density polyethylene)

Then, the LL surface of each of the dry laminated produce was heat-sealed. A thermal gradient testing machine was used for the heat-sealing with sealing pressure: 4kgf and sealing time: 1 second.

A tensile test machine was used and the sealing strength was observed with a pulling rate of 200 m/min.

As a result, it was found that the heat-sealing strength of Example 3 was 37 N/50mm and that of Example 4 was 34 N/50mm.

As seen from Examples 3 and 4, the sealing strength of Example 3 was improved without damaging the moisture permeability, the resistance against water pressure and the air permeability by laying and bonding an air permeable material by thermal lamination.

### [Example 5]

A three-layered packaging multilayer material including a paper layer was prepared on the basis of the third embodiment.

The thermal laminating apparatus was a thermal laminating machine marketed by Sansei Seiki Co., Ltd. [oil temperature regulation type, roll diameter: 300 mm, flat roll/flat roll, roll temperature: 150°C, pressure (linear pressure): 300 N/cm, laminating rate: 7 m/min].

Firstly, two-layered spunbonded non-woven fabric comprising a polyethylene type resin spunbonded non-woven fabric layer (ethylene-butene-1 copolymer same as that of Example 1) and an air permeable heat-resistant fiber material layer (polyethyleneterephthalate) [mass per unit area: 45 g/m² (former: 30 g/m², latter: 15 g/m²)] was used and rayon paper available from Okura Paper Manufacturing Co., Ltd. [mass per unit area: 30 g/m²] was laid thereon at the side of the polyethylene type resin spunbonded non-woven fabric layer to produce a three-layered packaging multilayer material including a paper layer.

The obtained three-layered packaging multilayer material including a paper layer was assessed for the following physical properties.

### (1) heat-sealing effect

A thermal gradient testing machine was used to heat-seal the surfaces of non-woven fabric of the obtained packaging multilayer material and the LLDPE surface of a commercially available multilayer film [drawn nylon (ONy): 15 µm/straight chain low density polyethylene (LLDPE): 50 µm] [heat-sealing temperature: 180°C, sealing bar: 15mm × 15mm, sealing pressure 20N and sealing time: 1 second].

The heat-sealed area of the obtained specimen was subjected to a 180 degrees peeling (T-peeling) test with a pulling speed of 200 m/min to observe the bonding strength.

As a result, it was found that the heat-sealing strength was 3.2 kg/15mm.

### (2) hot tuck effect

The non-woven fabric surfaces of the obtained packaging multilayer material were heat-sealed [heat-sealing temperature: 190°C, sealing bar: 15mm × 300mm, sealing pressure 20N and sealing time: 5 seconds]. Immediately after the sealing operation, the sealing bar was removed and the sealed surface was peeled to observe the length of the peeled part.

As a result, it was found that the peeled length was only 25 mm and the specimen showed an excellent hot tuck effect.

### [Example 2 for Comparison]

For the purpose of comparing with Example 5, a two-layered air permeable packaging multilayer material was prepared by using skin-core type bicomponent non-woven fabric of PET (core)/polyethylene (skin) ["ELEVES": tradename, available from Kanbo Co., Ltd., mass per unit area: 40 g/m²] for the non-woven fabric and rayon paper available from Okura Paper Manufacturing Co., Ltd [mass per unit area: 30 g/m²] for the paper and the bicomponent non-woven fabric side was used for embossing in the heat-sealing operation [embossing roll temperature: 115°C, flat roll temperature: 150°C, embossing pressure: 300 N/cm, laminating rate: 7 m/min].

The multilayer material was assessed as in Example 5.

As a result, it was found that, while the heat-sealing strength was 2.7 kg/15mm, the peeled length was 200 mm to prove a poor hot tuck effect.

### [Example 6]

The three-layered packaging multilayer material obtained in Example 5 including a paper layer and commercially available multilayer film used in Example 5 for heat-sealing effect were used to continuously produce bag-shaped packages of 200mm × 300mm at a rate of 20 shots/min at heat-sealing temperature of 200°C.

As a result, it was possible to obtain good packages in which no edges were cut in the sealing sections and no defective seals were found. The sealing strength was 3.1 kg/15mm width.

### [Example 7]

A two-layered packaging multilayer material including a paper layer was prepared on the basis of the fourth embodiment.

The thermal laminating apparatus 1 was a thermal laminating machine marketed by Sansei Seiki Co., Ltd. [oil temperature regulation type, roll diameter: 300 mm, embossing roll/flat roll, embossing roll temperature: 115°C, flat roll temperature: 130°C, percentage of embossing contact area: 21%, lattice pattern (pitch: 1.5 mm), embossing pressure (linear pressure): 3.00 N/cm, laminating rate: 7 m/min].

Firstly, polyethylene spunbonded non-woven fabric was used for the polyethylene type resin spunbonded non-woven fabric layer as in Example 1 and rayon paper available from Okura Paper Manufacturing Co., Ltd [mass per unit area: 20 g/m²] was thermally bonded as paper layer to a surface of the polyethylene spunbonded non-woven fabric, which was used as the side to be embossed, to produce a two-layered packaging multilayer material including a paper layer.

The obtained two-layered packaging multilayer material including a paper layer was assessed in a manner as described below.

The surface of the non-woven fabric of the obtained packaging multilayer material was heat-sealed under the following conditions. A high speed packing/packaging machine available from Komatsu Ltd. was used for the sealing operation in a die roll mode. A satin finish was used for the die roll and the packaging operation was conducted at a rate of 60 shots/min at sealing temperature of 205°C and under sealing pressure of 7.18N.

The heat-sealed area of each of the obtained specimens was subjected to a 180 degrees peeling (T-peeling) test with a pulling speed of 200 m/min to observe the bonding strength.

As a result, it was found that the heat-sealing strength was 1.2 kg/15mm width. No smear was found on the die roll.

### [Example 3 for Comparison]

For the purpose of comparing with Example 7, heat-sealing paper [mass per unit area: 20 g/m²], which is mixed paper of pulp and thermally bonded fiber (HDPE/PP) available from Mishima Paper Co., Ltd., was heat-sealed as in Example 7 and the heat-sealing strength was observed.

As a result, it was found that the heat-sealing strength was 0.8 kg/15mm width. Additionally, the die roll was smeared.

### [Example 8]

The two-layered packaging multilayer material obtained in Example 7 and including a paper layer was used to continuously package 100mm × 60mm pieces of a drying agent (silica gel) at a rate of 60 shots/min at heat-sealing temperature of 160°C.

As a result, it was possible to obtain good packages in which no silica gel was drawn into the sealing sections and that showed a sealing strength of 1.1 kg/15mm width.

### Industrial Applicability

This invention relates to a packaging multilayer material and also to a package formed by using such a multilayer material. The present invention provides a packaging multilayer material for packaging a functional article such as a deoxidizing agent, a drying agent or a desiccating agent and also a package formed by using such a multilayer material.

## Claims

1. A packaging multilayer material formed by sequentially laying an air permeable heat-resistant fiber material layer having a heat-resistance of not lower than 150 °C, a polyethylene type resin spunbonded non-woven fabric layer and a micro-porous film layer in the above listed order by means of thermal bonding.

2. The packaging multilayer material according to claim 1, wherein
the air permeable heat-resistant fiber material layer is made of resin spunbonded non-woven fabric having a melting point between 150 and 300°C.

3. The packaging multilayer material according to claim 1 or 2, wherein
the polyethylene type resin is an ethylene- α -olefin copolymer having a density between 880 and 950 kg/m³.

4. The packaging multilayer material according to any of claims 1 through 3, wherein
the micro-porous film layer is made of polyethylene type resin.

5. A packaging multilayer material formed by laminating an air permeable heat-resistant fiber material layer having a heat-resistance of not lower than 150°C, a polyethylene type resin spunbonded non-woven fabric layer, a micro-porous film layer and an air permeable material in the above listed order by means of thermal bonding.

6. The packaging multilayer material according to claim 5, wherein
the air permeable material is non-woven fabric.

7. The packaging multilayer material according to claim 6, wherein
the non-woven fabric is spunbonded non-woven fabric or split fiber non-woven fabric.

8. The packaging multilayer material according to any of claims 5 through 7, wherein
the air permeable heat-resistant fiber material layer is made of resin spunbonded non-woven fabric having a melting point between 150 and 300°C.

9. The packaging multilayer material according to claim 4 or 5, wherein
the polyethylene type resin is an ethylene- α -olefin copolymer having a density between 880 and 950 kg/m³.

10. The packaging multilayer material according to any of claims 1 through 8, wherein
the micro-porous film layer is made of polyethylene type resin.

11. A packaging multilayer material formed by sequentially laying an air permeable heat-resistant fiber material layer having a heat-resistance of not lower than 150°C, a polyethylene type resin spunbonded non-woven fabric layer and a paper layer in the above listed order by means of thermal bonding.

12. A packaging multilayer material formed by sequentially laying a polyethylene type resin spunbonded non-woven fabric layer and a paper layer in the above listed order by means of thermal bonding.

13. The packaging multilayer material according to claim 1 1 or 12, wherein
the air permeable heat-resistant fiber material layer is made of resin spunbonded non-woven fabric having a melting point between 150 and 300°C.

14. The packaging multilayer material according to any of claims 11 through 13, wherein
the polyethylene type resin is an ethylene- α-olefin copolymer having a density between 880 and 950kg/m³.

15. A package formed by using a packaging multilayer material according to any of claims 1 through 14.

16. A package formed by using a packaging multilayer material according to any of claims 1 through 14 and containing a deoxidizing agent, a drying agent, a moisture absorbing agent, a deodorant, a heat generating agent, an insecticide, a desiccating agent or an aromatic agent
